# EUROPEAN PATENT SPECIFICATION

(11) **EP 0 799 258 B1**
(45) Date of publication and mention of the grant of the patent: **21.03.2001**
(21) Application number: 95943928.2
(22) Date of filing: 13.12.1995
(51) Int. Cl.: C08F 290/14

(54) **ANIONIC LATEX COMPOSITION HAVING SURFACE HYDROPHILICITY**
ANIONISCHE LATEXZUSAMMENSETZUNG MIT HYDROPHILER OBERFFLÄCHE
COMPOSITION DE LATEX ANIONIQUE HYDROPHILE EN SURFACE

(30) Priority: 20.12.1994 US 359475
(43) Date of publication of application: 08.10.1997
(73) Proprietor: THE PROCTER & GAMBLE COMPANY, Cincinnati, Ohio 45202 (US)
(72) Inventor: NODA, Isao, Fairfield, OH 45014 (US)
(74) Representative: Hirsch, Uwe Thomas
(86) International application number: US9516674
(87) International publication number: WO9619511

(56) References cited:
- US-A- 4 734 445
- US-A- 4 785 030
- US-A- 5 015 245
- US-A- 5 200 037

## Description

### FIELD

The present invention relates to latex compositions having surface hydrophilicity. More specifically, the present invention relates to an anionic latex composition having surface hydrophilicity.

### BACKGROUND

Materials which have hydrophilic surfaces are easily wetted by water and other polar liquids. This should be contrasted with bulk hydrophilicity where the material "swells" in the presence of these polar liquids. Materials without bulk hydrophilicity having only surface hydrophilicity do not swell, which can be highly desirable where "wet strength" is required. Materials which are bulk hydrophilic often have decreased wet strength when swollen with water.

For many product applications the hydrophilic surface needs to have some degree of permanency. Basically, this translates into the ability of the surface to maintain wettability after repeated exposures to water or other polar liquids, as well as exposure to air. Permanency of the hydrophilic surface can be particularly difficult where the underlying bulk material is hydrophobic, such as in the case of polyethylene or polypropylene films. In these instances, the hydrophilic surface layer needs to be compatible and adherent to the underlying bulk material; otherwise, the hydrophilic surface can be stripped away after relatively few exposures to water or other polar liquids. In addition, when the underlying bulk material is soft or elastomeric, the surface layer can be "swallowed up", resulting in a loss of surface hydrophilicity.

Surface hydrophilicity is preferably combined with other properties such as flexibility, elasticity and strength. One category of materials desirably having such combined properties includes the binder systems used in making cloth-like nonwoven fabrics and paper products. A variety of latex compositions have previously been used as binders, including acrylic (methacrylic) latexes and styrene-butadiene latexes. These latexes are typically formed by emulsion polymerization of the respective monomers and can optionally contain surfactants to stabilize the latex particles, as well as to impart a certain amount of hydrophilicity to the nonwoven product. These prior art latex binder systems tend to be nonwettable (hydrophobic) or to lose their wettability after repeated exposure to water. Additionally, the mechanical strength of these binders can vary greatly depending on changes in pH.

There are three important physical properties of cloth-like paper products. These properties are softness; absorbency, particularly of aqueous fluids; and strength, particularly strength when wet. Softness is the tactile sensation perceived when the consumer holds the product, rubs it across the skin, or crumples it with the hand. This tactile sensation can be related to the stiffness of the paper product. Absorbency is a measure of the ability of the product to absorb quantities of liquid, particularly aqueous fluids or dispersions. Strength is the ability of the product to maintain physical integrity, and to resist tearing, bursting and shredding under use conditions, particularly when wet. Research and development efforts have been directed to improvement of each of these properties without adversely affecting the others, as well as improvement of two or three of these properties simultaneously.

Water-soluble cationic resins are often used as wet-strength additives in paper making. One such group of wet-strength additives are the polyamide-epichlorohydrin resins sold under the trade name KYMENE^{TM} See, for example, U.S. Pat. No. 3,700,623 to Keim issued Oct. 24, 1972; and U.S. Pat. No. 3,772,076 to Keim, issued Nov. 13, 1973. Another group of water-soluble cationic wet-strength resins are the polyacrylamides sold under the trade name PAREZ^{TM} See, for example, U.S. Pat. No. 3,556,932 to Coscia et al, issued Jan. 19, 1971; and U.S. Pat. No. 3,556,933 to Williams et al issued Jan. 19, 1971.

The cellulosic fibers used in papermaking are negatively charged. Since the water-soluble wet-strength resins are cationic (positively charged), they are deposited and retained well when directly added to the aqueous pulp slurry. Such "wet-end addition" is highly desirable in papermaking. Subsequently in the papermaking process, these resins cross-link and eventually become insoluble in water. When this occurs, the wet-strength resin acts as a "glue" to hold the fibers of the paper together. This results in the desired wet-strength property.

Unfortunately, paper products made with such resins generally have a stiff, paper-like feel. To impart greater softness to the paper product, elastomeric latexes can be used as the binder system. However, these elastomeric latexes are either nonionic in character or else are merely partially anionic due to inclusion of anionic comonomers or surfactants. The nonionic elastomeric latexes cannot be used as "wet-end additives" in a conventional papermaking process. Instead, these nonionic latexes have to be impregnated or pattern-printed on the subsequently laid paper furnish, such as by the process described in European patent application No. 33,988 to Graves et al, published Aug. 19, 1981. Furthermore, additional wet-strength is frequently desired, beyond that provided by such resins.

Based on the foregoing, there is a need for a material which is capable of binding to cationically charged substrates which will provide wet-strength properties and/or impart greater softness to the substrate.

It is an object of the present invention to provide an anionic latex composition having surface hydrophilicity.

It is also an object of the present invention to provide a paper sheet comprising such a surface-hydrophilic anionic latex.

It is also an object of the present invention to provide an absorbent structure (e.g., diaper or sanitary pad) comprising such a surface-hydrophilic anionic latex.

It is also an object of the present invention to provide a process for preparing an anionic latex composition having surface hydrophilicity.

These and other objects of the present invention will become evident to those skilled in the art from a reading of the present disclosure with the appended claims.

### SUMMARY

The present invention is directed to a latex composition comprising: an aqueous phase selected from water, water-miscible solvents, or mixtures thereof; and from 5 to 50% by weight of latex particles dispersed in the aqueous phase. The latex particles comprise an elastomeric hydrophobic core and an outer hydrophilic shell attached to the core. The core comprises a polymer comprising one or more elastomer forming monomeric units and one or more carboxylate containing monomeric units. The shell comprises moieties L-X, wherein L comprises a hydrophobic hydrocarbyl group containing one or more unsaturated bonds and X is a hydrophilic group.

The present invention is also directed to a process for making such a latex composition.

The present invention is also directed to a paper sheet comprising such a latex composition.

The present invention is also directed to an absorbent structure comprising such a latex composition.

Such a composition satisfies the need for a material which is capable of binding to cationically charged substrates which will provide wet-strength properties and/or impart greater softness to the substrate.

### DETAILED DESCRIPTION

The following is a list of definitions for terms used herein.

"Acrylate" means CH₂=CHC(O)O-R¹, wherein R¹ is an alkyl. Preferably, R¹ is a C₁ -C₁₂ alkyl, more preferably R¹ is a methyl, ethyl , *t*-butyl or *n*-butyl.

"Alkenyl" means a carbon-containing chain, preferably from C₁ to C₂₈, more preferably from C₁₂ to C₂₀, more preferably still from C₁₅ to C₁₈; which may be straight, branched or cyclic, preferably straight or branched, more preferably straight; substituted (mono- or poly-) or unsubstituted, preferably unsubstituted; and monounsaturated (i.e., one double or triple bond in the chain), or polyunsaturated (i.e., two or more double bonds in the chain, two or more triple bonds in the chain, or one or more double and one or more triple bonds in the chain).

"Alkoxy" means R²-O-, wherein R² is an alkyl or alkenyl.

"Alkyl" means a carbon-containing chain from C₁ to C₂₈, more preferably from C₁₂ to C₂₀, more preferably still from C₁₅ to C₁₈; which may be straight, branched or cyclic, preferably straight or branched, more preferably straight; substituted (mono-or poly-) or unsubstituted, preferably unsubstituted; and saturated.

"Carboxylate containing monomeric unit" means a monomeric unit containing a carboxylate moiety having the formula -COOH or -COO⁻ M, wherein M is a counter ion having a positive charge. Preferably M is Na⁺, K⁺, or Ca⁺⁺. Note when M is multivalent (e.g., Ca⁺⁺), stoichiochemetric adjustment is required.

"Comprising" means that other steps and other ingredients which do not affect the end result can be added. This term encompasses the terms "consisting essentially of" and "consisting of".

"Elastomeric" refers to materials having rubber-like properties in terms of extensibility and elastic recovery. See CONDENSED CHEMICAL DICTIONARY (11th edition, 1987), pp. 453-454, which defines the term "elastomer".

"Hydrophilic" refers to materials which are substantially wetted by water.

"Hydrophobic" refers to materials which are substantially non-wetted by water.

"Wetted/wettability" refers to the ability of a solid surface to spread a liquid (typically water) upon contact such that the wetting liquid is no longer repelled by the surface.

"Unsaturated fatty acid" means R³-COOH, wherein R³ is an alkenyl.

All percentages are by weight of total composition unless specifically stated otherwise.

All ratios are weight ratios unless specifically stated otherwise.

The present invention, in its product and process aspects, is described in detail as follows.

### Anionic Latex Compositions

The anionic latex composition of the present invention comprises: an aqueous phase selected from water, water-miscible solvents, or mixtures thereof; and from 5 to 50% by weight of latex particles dispersed in the aqueous phase. The latex particles are dispersed in the aqueous phase such that a colloidally stable suspension is formed.

In addition to water, the aqueous phase can include minor amounts of water-miscible solvents. Suitable water-miscible solvents include the C₁-C₈ alcohols, such as methyl alcohol, ethyl alcohol and isopropyl alcohol; ketones such as acetone and methyl ethyl ketone; and other water-miscible solvents such as ethyl acetate.

An effective amount of the latex particles are dispersed in the aqueous phase. "An effective amount of the latex particles" depends upon the particular use of the latex composition, the manner in which it is formed, and like factors. Latex compositions having high solids content of latex particles are preferred. The latex compositions preferably comprise up to 50% by weight latex particles on a solids basis; more preferably from 10% to 25%.

The latex particles comprise an elastomeric hydrophobic core and an outer hydrophilic shell which is integral to the core. The shell can be integral with the core via either physical attachment or chemical attachment. For reasons of permanence, the shell is preferably chemically attached to the core. Chemical attachment results through covalent bonding of the shell to the core.

The elastomeric hydrophobic core is the predominant component of the latex particles by weight. This elastomeric core is based on a polymer formed from one or more elastomer forming monomers (i.e., a monomer capable of forming a very flexible polymer, typically in combination with other comonomers) to impart properties such as stiffness, strength and resistance to flowability at elevated temperatures. The polymers which form the elastomeric core usually have glass transition temperature (T_{*g*}) values of about 35°C or less. Preferred polymers for the elastomeric core preferably have T_{*g*} values of about -10°C or less. Preferably, the elastomer forming monomeric units are derived from ethyl acrylate, lauryl methacrylate, methyl acrylate, methyl methacrylate, *n*-butyl acrylate, *t*-butyl acrylate, 1,3-butadiene, ethylene, isoprene, propylene, styrene, *t*-butyl styrene, vinyl acetate, or mixtures thereof.

The polymer further comprises one or more carboxylate containing monomeric units. Preferably, the carboxylate containing monomeric units are derived from acrylic acid, glycidyl methacrylate, itaconic acid, methacrylic acid, unsaturated fatty acids, vinyl benzoic acid, or mixtures thereof.

The function of the carboxylate moiety is to provide sufficient anionic charge density to cause deposition and retention of the latex particles on positively charged surfaces; e.g., cellulose treated with cationic polyelectrolytes. For example, in a papermaking process, latex particles which are not retained by the paper fibers can accumulate in the process water and contaminate the papermaking machinery. Accordingly, it is desirable to maximize the amount of latex which is deposited and retained on the fibers. The anionic charge density of the latex compositions of the present invention is sufficiently great to cause deposition and retention of as much as from 80% to 90% of the latex particles on the fibers.

Preferably, the polymer comprises about 100 parts elastomer forming monomeric units and from 1 to 30 parts carboxylate containing monomeric units, more preferably from 2 to 10 parts carboxylate containing monomeric units.

In a preferred embodiment, the core comprises styrene, butadiene (or isoprene) and acrylic acid (or methacrylic acid); preferably in a ratio of 40:60:2, respectively.

The hydrophilic surface, or shell, is the primary functional component of the latex particles. The hydrophilic shell of the latex particles provides sufficient hydrophilicity to colloidally stabilize the latex particles in the aqueous phase, thereby preventing flocculation. Moreover, the hydrophilic properties of the latex can be used to impart water-wettability to otherwise hydrophobic surfaces.

Preferably, the latex particle comprises about 100 parts elastomer forming monomeric units and from 1 to 50 parts shell, more preferably from 2 to 10 parts shell, more preferably still from 4 to 5 parts shell.

The shell comprises moieties L-X, wherein X is a nonionic hydrophilic group and is integral with L, a hydrophobic linking group. L-X has surface active and emulsifying properties, and is referred to as a "diblock".

As exemplification tail group (L) can be an unsaturated hydrocarbyl group having one or more double bonds. Typically, such unsaturated hydrocarbyl groups will have from 10 to 22 carbon atoms and include, for example, hydrocarbyl groups derivable from materials such as eleostearic acid, linoleic acid, linolenic acid, oleic acid and prinaric acid. Other unsaturated L groups include oligomeric and polymeric materials having residual double bonds, including polybutadiene mixtures and polyisoprene mixtures. The oleyl group is a preferred L group in the diblock materials used herein.

The hydrophilic head group (X) can be any compatible chemical moiety which does not substantially interfere with colloidal stability, or deposition and retention characteristics of the latex particles. For example, X groups could include alkoxy, amidate, amide, carboxylate, ethoxylate, hydroxy, phosphate and sulfate. More preferably, X groups are hydroxy or ethoxylate; more preferably ethoxylate; more preferably polyoxyalkylene hydrophilic groups; more preferably still, polyoxyethylene groups of the formula (OCH₂―CH₂)ₙ―OH, where n is an integer from 5 to 50, preferably from 10 to 20.

### Process for Preparing an Anionic Latex Composition

The latex composition of the present invention may be formed by emulsion polymerization. In emulsion polymerization, a nonionic diblock emulsifier of the foregoing L-X type is dispersed in water. A water soluble free-radical initiator is then added. Optionally, a water-soluble chain transfer agent may also be added to control the molecular weight of the latex particles formed during emulsion polymerization. A polymerizable component containing elastomer monomer and carboxylate monomer, plus any comonomer, is added and the mixture is then heated to a temperature suitable for emulsion polymerization.

During polymerization, the diblock emulsifier stabilizes the monomer droplets of the polymerizable component dispersed in the aqueous phase and forms micelles which become swollen with monomer(s) from the dispersed droplets. While not intending to be bound by theory, it appears that the free-radical initiator diffuses into the monomer-swollen micelles and initiates polymerization of the monomer(s) to form the latex particles. The diblock emulsifier on the surface of the micelles solvates additional monomer and stabilizes the forming latex particles. Eventually, the diblock emulsifier becomes grafted or embedded onto the elastomeric core of the particle to form the nonionic hydrophilic shell.

One embodiment of the present invention therefore relates to a process for preparing a latex composition, comprising the steps of: (A) providing a mixture containing (a) water; (b) a dispersion of from 5 to 50% of a polymerizable component; (c) an effective amount of a water-soluble free-radical polymerization initiator; and (d) an effective amount of an amphiphilic diblock emulsifier L-X; and (B) heating the mixture to a temperature sufficient to cause emulsion polymerization of the polymerizable component. Optionally, the mixture may further comprise an effective amount of a water-soluble chain transfer agent.

The polymerizable component comprises one or more elastomer forming monomers and one or more carboxylate containing monomers.

Preferably, the elastomer forming monomers are elastomer. monomers which are water-insoluble and comprise at least one double bond. Preferred elastomer forming monomers are selected from ethyl acrylate, lauryl methacrylate, methyl acrylate, methyl methacrylate, *n*-butyl acrylate, *t*-butyl acrylate, 1,3-butadiene, ethylene, isoprene, propylene, styrene, *t*-butyl styrene, vinyl acetate, or mixtures thereof.

Preferably, the carboxylate containing monomers are selected from acrylic acid, glycidyl methacrylate, itaconic acid, methacrylic acid, unsaturated fatty acids, vinyl benzoic acid, or mixtures thereof.

The mixture preferably comprises from 5% to 50% of the polymerizable component; more preferably from 10% to 25%.

The polymerizable component preferably comprises about 100 parts elastomer forming monomer and from 1 to 30 parts carboxylate containing monomer, more preferably from 2 to 10 parts carboxylate containing monomer.

In a preferred embodiment, the polymerizable component comprises styrene, butadiene (or isoprene) and acrylic acid (or methacrylic acid); preferably in a ratio of 40:60:2, respectively.

"An effective amount of a water-soluble free radical polymerization initiator" depends upon a variety of factors, including the type of polymerizable components employed. Preferably, the mixture comprises about 100 parts elastomer forming monomer and from 0.5 to 10 parts free radical polymerization initiator, more preferably from 1 to 2 parts free radical polymerization initiator. Preferred initiators include potassium persulfate.

"An effective amount of a water-soluble chain transfer agent" depends upon the desired level of control over the molecular weight of the resulting polymers. Preferably, the mixture comprises about 100 parts elastomer forming monomer and from 0.5 to 10 parts water-soluble chain transfer agent, more preferably from 1 to 2 parts water-soluble chain transfer agent. Preferred chain transfer agents include, but are not limited to, dodecyl mercaptan.

"An effective amount of a nonionic diblock emulsifier" depends upon the particular emulsifier being used, the type of latex composition desired, and like factors. Preferably the mixture comprises about 100 parts elastomer forming monomer and from 1 to 50 parts amphiphilic diblock emulsifier, more preferably from 2 to 10 parts amphiphilic diblock emulsifier, more preferably still from 4 to 5 parts amphiphilic diblock emulsifier.

Two particularly important factors in determining what amphiphilic diblock emulsifier to use are: (1) the ability of the emulsifier to stabilize the monomer droplets of the polymerizable component in the aqueous phase; and (2) the ability of the emulsifier to become affixed, grafted or otherwise firmly attached onto the core of the formed latex particles. As long as these two key criteria are satisfied, the selection of the diblock emulsifier is essentially a matter of what properties are desired in the latex composition. The diblock emulsifier basically has the structure: L-X, wherein L is the hydrophobic block and X is the hydrophilic block integral with the hydrophobic block.

As exemplification tail group (L) can be an unsaturated hydrocarbyl group having one or more double bonds. Typically, such unsaturated hydrocarbyl groups will have from 10 to 22 carbon atoms and include, for example, hydrocarbyl groups derivable from materials such as eleostearic acid, linoleic acid, linolenic acid, oleic acid and parinaric acid. Other unsaturated L groups include oligomeric and polymeric materials having residual double bonds, including polybutadiene mixtures and polyisoprene mixtures. The oleyl group is a preferred L group in the diblock materials used herein.

The hydrophilic head group (X) of the diblock material can be any desired hydrophilic group, including groups such as alkoxy, amidate, amide, carboxylate, hydroxy, phosphate and sulfates. More preferably, X groups are hydroxy or ethoxylate; more preferably ethoxylate; more preferably polyoxyalkylene hydrophilic groups; more preferably still, polyoxyethylene groups of the formula (OCH₂―CH₂)ₙ―OH, where n is an integer from about 5 to about 50, preferably from about 10 to about 20.

It will be readily appreciated by those skilled in the emulsifier arts that the preferred diblock materials for use herein fall within the class of well-known ethoxylated alcohol nonionic surfactants (e.g., VOLPO-20^{TM} Croda Inc., Mill Hall, PA) having a hydrocarbyl tail group and an ethoxylated head group, with the proviso that the tail group have one or more points of unsaturation which allow the group to become involved in the polymerization process, thereby bonding the material to the latex particles.

### Paper Sheets

The present invention further relates to paper-type sheets. Various paper manufacturing processes have been described in great detail in patents and other literature. It is to be understood that the invention does not relate to any particular type, shape or style of such paper sheets; rather, the invention relates to the particular choice of wet-strength enhancing agent utilized in the manufacture of various paper-type products.

Specifically, the invention relates to a paper sheet comprising multiple cellulosic fibers and the surface hydrophilic anionic latex described herein. Preferably, the paper sheet comprises from 1% to 30% of the latex.

In a preferred embodiment, the paper sheet additionally comprises an absorbent gelling material.

### Absorbent Structures

The present invention further relates to absorbent structures such as infant diapers, adult incontinent briefs and pads, sanitary napkins and pantiliners. Such structures have been described in great detail in patents and other literature. A wide variety of such articles are commercially available. It is to be understood that the invention does not relate to the manufacture of any particular type, shape or style of such articles; rather, the invention relates to the particular choice of wet-strength enhancing agent utilized in the manufacture of such an absorbent structure.

Specifically, the invention relates to an absorbent structure comprising a topsheet, a backsheet, and an absorbent core interposed between the topsheet and backsheet, wherein the backsheet is a paper sheet, comprising multiple cellulosic fibers and the surface hydrophilic anionic latex described herein.

In a preferred embodiment, the absorbent core comprises an absorbent gelling material.

In another preferred embodiment, the absorbent core comprises oxidized cellulose.

### Examples

The following examples further describe and demonstrate the preferred embodiments within the scope of the present invention.

### Example 1

This example shows the manufacture of a surface-hydrophilic anionic latex based on styrene, butadiene and acrylic acid.

| Reagents | Amount |
|---|---|
| " VOLPO-20^{TM} | 0.322 g |
| Potassium persulfate | 0.072 g |
| Acrylic acid | 0.14 g |
| Styrene | 2.86 g |
| 1,3-Butadiene | 4.29 g |
| Distilled water as suspending medium | 50 mL |

The water reaction medium is sparged for 30 minutes with argon prior to use. A 250 mL glass reaction bottle equipped with a magnetic stir bar is flushed with nitrogen for 5 minutes. The VOLPO-20^{TM} (amphiphilic diblock emulsifier), potassium persulfate (free-radical polymerization initiator) and distilled water are placed in the reaction bottle, which is sealed with a rubber gasket and two-holed bottle cap. The mixture is argon sparged for 30 minutes. The acrylic acid (carboxylate containing monomer) is added using a syringe and the styrene (elastomer forming comonomer) is added using a syringe. The reaction bottle is placed in an ice bath. The 1,3-butadiene (elastomer forming comonomer) is condensed in dry ice. Using a double-ended syringe and argon pressure, the 1,3-butadiene is added to the reaction vessel. A rubber septum is wired in place over the bottle cap and the reaction bottle is placed in an oil bath at 60°C for 40 hours, with slow stirring. At the end of this time, the reaction product is pulled and strained through a fine wire sieve to provide a suspension of a captioned latex having a solid content of 13.5%.

### Example 2

This example shows the manufacture of a surface-hydrophilic anionic latex based on styrene, butadiene and acrylic acid. In this case, the reaction of Example 1 is repeated under the same conditions, but using 0.358 g of acrylic acid. The reaction product is a 12.8% anionic latex suspension.

### Example 3

This example shows the manufacture of a surface-hydrophilic anionic latex based on styrene, butadiene and methacrylic acid. The reaction of Example 1 is repeated under the same conditions, but methacrylic acid (0.14 g) is used instead of acrylic acid, and 0.072 g of dodecyl mercaptan (water soluble chain transfer agent) is added to control the upper limit of the molecular weight of the final product; and the reaction is allowed to proceed for 26 hours at 60°C. The reaction product is an 11% anionic latex suspension.

### Example 4

This example shows the manufacture of a surface-hydrophilic anionic latex based on styrene, butadiene and glycidyl methacrylate. The reaction of Example 1 is repeated under the same conditions, but glycidyl methacrylate (0.14 g) is used instead of acrylic acid. The reaction product is a 12% anionic latex suspension.

### Example 5

This example shows the manufacture of a surface hydrophilic anionic latex based on styrene, isoprene, ethylene and acrylic acid. The reaction of Example 1 is repeated under the same conditions, but isoprene and ethylene are used in addition to styrene as the elastomer forming comonomers, instead of butadiene. The reaction product is an 11 % anionic latex suspension.

### Example 6

This example shows the manufacture of a surface hydrophilic anionic latex based on styrene, acrylic acid and 1,3-butadiene. A glass-lined 3-gallon (11,35L) stainless steel reactor is charged with 8 L of distilled water and 40 g of VOLPO-20^{TM} to form a solution. This solution is sparged with argon overnight. To the reactor containing the VOLPO-20^{TM} solution, the following components are added through the charging port of the reactor: 571 g of styrene, 22.9 g of potassium persulfate, 22.9 g of acrylic acid, and 571 g of 1,3-butadiene. The reactor is then sealed, and the reactor temperature is adjusted to 60°C via an in-line steam coil and water-cooled jacket surrounding the reactor. The reaction mixture is stirred with a mixing impeller rotating at the rate of 341 revolutions per minute for 23 hours to complete the polymerization reaction. At the end of this time, the reaction product is pulled and strained through a fine wire sieve to provide a suspension of latex having a solid content of 11.4%.

### Example 7

This example shows how to prepare a handsheet comprising a surface-hydrophilic anionic latex. Unrefined northern softwood Kraft (NSK) pulp (2.65 g (2.50 g dry weight); P&G Cellulose, Memphis, Tennessee) is dispersed in 500 mL tap water at ambient pH (ca. 7.5). The pulp is then treated with 0.2 gm of 13% aqueous solution of KYMENE^{TM} (KYMENE 557, Hercules, Inc., Wilmington, Delaware). 5.0% of the anionic latex solids of Example 1 is added to. the pulp slurry and stirred for 30 minutes. A standard Deckle Box is used to form a handsheet out of the resulting pulp slurry using tap water at ambient pH (ca. 7.5) and dried on a drum dryer at 110°C to 115°C. The resulting handsheet has excellent wet-strength properties and a pleasantly soft feeling.

### Example 8

This example shows the use of a surface-hydrophilic anionic latex as an additive in a continuous paper making process. Approximately 220 kg (dry weight) of refined NSK pulp is dispersed in water at a consistency of about 2.5% and kept in a stirred holding tank. About 17 kg of KYMENE^{TM} solution (13%) is added to the pulp slurry. About 400 liters of anionic latex prepared according to Example 1 is added to the KYMENE^{TM}-treated pulp to achieve the wet-end deposition of the binder. The latex-treated pulp is then fed to a pilot scale paper machine (equipped with normal papermaking process components, such as a headbox, forming wire and continuous dryer) at a rate of about 800 L/minute. The paper machine is operated at the production speed of 200 m/minute. The latex content of the final paper products can be measured by x-ray fluorescence intensity. The estimated latex add-on level for the sample measured by this method is on the order of 11-12%. The wet strength of the final paper products produced by a continuous Dilot paper machine can be determined by measuring the tensile strength required to tear a one-inch-wide (2.5 cm) strip of paper product after the sample is soaked in water.

### Example 9

This example shows the preparation of a superabsorbent fiber for use in certain absorbent structure and paper making examples discussed below.

### Starting Materials

Acrylic acid (Polysciences Inc., Warrington, Pa.) is vacuum distilled through a Vigreux column and is preferably used fresh in subsequent operations, e.g., within one day of distillation. Itaconic acid (Aldrich Chemical Co., Milwaukee, Wis.) is obtained in 99%+ purity and is used as received. The free-radical initiator 2,2'-azobis(2-amidinopropane) dihydrochloride (WAKO V-50, Wako Pure Chemical Industries, Osaka, Japan) is also used as received. Unless otherwise noted, water is triply distilled. Where polymers are dialyzed, the dialysis membrane is obtained from Spectrum Medical Industries, Inc., Los Angeles, California.

Polyethylene glycols (these preferred polyols are commonly known as "PEG", various suppliers being suitable) as used in the Examples have nominal molecular weights of 200, 1000, 1500, 3350, and 6800. PEG 200 is obtained from Polysciences Inc., Warrington, Pennsylvania. PEG 1000, PEG 1500 and PEG 6800 are obtained from Scientific Polymer Products, Inc., Ontario, New York. PEG 3350 is obtained from Sigma Chemical Co., St. Louis, Missouri. Southern softwood Kraft (SSK) pulp and NSK pulp are obtained from P&G Cellulose, Memphis, Tennessee. Chemithermomechanical pulp is obtained from Quesnel Paper Co., Quesnel, B.C, Canada.

### Preparation of a Poly(acrylate-co-itaconate) Copolymer Suitable for use in Making a Super-absorbent Fiber (90 Mole % Acrylate, 10 Mole % Itaconate

Acrylic acid (20.000 g, 0.27755 mole), itaconic acid (4.0121 g, 0.038386 mole), Wako V-50 (0.0837 g, 0.308 millimole), and 150 ml of water which has been acidified to pH 2.0 with hydrochloric acid are added to a 250 ml three-necked round-bottomed flask. The necks are fitted with a thermometer, a stopper, and a gas inlet/outlet adapter capable of bubbling gas through a liquid in the flask and venting it. The solution is deaerated by passage of nitrogen gas and is then placed under an atmosphere of argon. The solution is heated to 55°C and is maintained at this temperature for 15 hours. The viscous solution of copolymer is cooled to ambient temperature and is dialyzed overnight against water (Spectrapor 3 tubing with molecular weight cut-off at 3500) to remove any unreacted monomers. The dialyzed solution is freeze dried to afford 23.00 g of poly(acrylate-co-itaconate) copolymer, acid form, as a colorless solid.

### Preparation of Superabsorbent Fiber

The poly(acrylate-co-itaconate) copolymer (2.00 g) is dissolved by adding it portion wise to 20 ml of water while stirring and heating to 65°-70°C. To the solution is added polyethylene glycol (0.334 g, nominal molecular weight 3350) predissolved in 5 ml of water. Stirring is continued until dissolution is complete. The resulting aqueous medium is cooled to ambient temperature and the pH is adjusted to 3.00 (the "pH of the aqueous medium" referred to elsewhere herein) with Molar sodium hydroxide. Loose fibers of SSK pulp (2.00 g bone-dry weight basis) are added. The resulting slurry is thoroughly mixed and is spread out into a thin layer on a 6-inch (15 cm) diameter watch glass of thickness about 3 mm. The slurry layer is dried in an oven at 65°-70°C, a temperature selected to minimize or avoid crosslinking reactions, and is then cured by placing the watch glass in an oven preheated to a curing temperature of 130°C. The curing time is 11.5 minutes. The layer, now about 1 mm thick, is cooled to ambient temperature. This yields fiber in the acid form, which is. not particularly absorbent. The fiber is then repulped. In practice it is convenient to soak it with distilled water, tear it into small pieces and add it to. 400 ml of distilled water. After further stirring (e.g., overnight) the pH of the mixture is adjusted to 2.0 with hydrochloric acid and it is mixed in a Waring Blender in two steps wherein (1) the blender is run on low speed for 5.0 minutes at 50% power and (2) the blender is run for 1.0 minute on low speed at full power. The fibers, still in the acid form, are collected by suction filtration in a Buchner funnel fitted with a handsheet forming wire, washed with 400 ml of water, and are re-suspended into 500 ml of water. The slurry pH is adjusted to 8.5 using 1 Molar sodium hydroxide in water. (Using potassium hydroxide or lithium hydroxide instead of sodium hydroxide at this stage would result in the potassium or lithium form of the fibers.) Over two days, the pH is periodically checked and readjusted to 8.5 with sodium hydroxide. During this period, the fibers exchange to the sodium salt form, which is highly absorbent. Thus, the fibers swell. The fully swollen fibers are collected by suction filtration and are washed with distilled water.

### Example 10

This example shows the preparation of a superabsorbent fiber for use in certain absorbent structure and paper making examples discussed below.

### Starting-materials

Poly(methyl vinyl ether-co-maleate) copolymers are obtained from GAF Chemicals Corp., Wayne, N.J. Suitable anhydride forms of the copolymers are GANTREZ AN-149, GANTREZ AN-169, and GANTREZ AN-179, having number average molecular weights, M_{*n*}, of 50,000, 67,000 and 80,000, respectively, as identified by GAF. The corresponding acid forms can be obtained by aqueous hydrolysis. A suitable acid-form copolymer directly obtainable commercially from the same supplier is GANTREZ S-97. It can be purchased either as a solid or as an aqueous solution.

Polyethylene glycols (these preferred polyols are commonly known as "PEG", various suppliers being suitable) as used in the Examples have nominal molecular weights of 200, 1000, 1500, 3350, and 6800. PEG 200 is obtained from Polysciences Inc., Warrington, Pennsylvania. PEG 1000, PEG 1500 and PEG 6800 are obtained from Scientific Polymer Products, Inc., Ontario, New York. PEG 3350 is obtained from Sigma Chemical Co., St. Louis, Missouri. SSK pulp, NSK pulp, bleached hardwood aspen pulp, bleached hardwood sulfite pulp, cotton linters, bleached hardwood eucalyptus pulp, dissolving SSK (V-60), and mercerized dissolving SSK (V-5), are obtained from P&G Cellulose, Memphis, Tennessee. Chemithermomechanical pulp is obtained from Quesnel Paper Co., Quesnel, British Columbia, Canada.

Unless otherwise noted, acetone is reagent grade and water is triply distilled.

### Preparation of Superabsorbent Fiber

The GANTREZ S-97 (3.35 g) is dissolved by adding it portion wise to 30 ml of water which has been acidified to pH 2.00 with 1 Molar hydrochloric acid while stirring and heating to 65°-70°C. To the solution is added polyethylene glycol (0.500 g, nominal molecular weight 3350). Stirring is continued until dissolution is complete. The resulting aqueous medium is now cooled to ambient temperature. The pH of this medium (the "pH of the aqueous medium" referred to elsewhere herein) is measured to be 1.60. Loose fibers of chemithermomechanical pulp (3.00 g) are added. The resulting slurry is thoroughly mixed and is spread out into a thin layer on a piece of aluminum foil. The slurry layer is dried in an oven at 65°-70°C., a temperature selected to minimize or avoid crosslinking reactions. The layer, now about 1 mm thick, is removed from the foil and is cured by placing it in an oven preheated to a curing temperature of 130°C. The curing time is 6.5 minutes. The layer is cooled to ambient temperature. This yields raw fiber in the acid form, which is not particularly absorbent. The fiber is then repulped. In practice it is convenient to break it into small pieces and add it to 500 ml of distilled water. After further stirring (e.g., 1 hour) the pH of the mixture is adjusted to 2.0 with hydrochloric acid and it is mixed in a Waring Blender for 1 minute on low speed. The fibers, still in the acid form, are collected by suction filtration in a Buchner funnel fitted with a handsheet forming wire, are washed with 500 ml of water, and are re-suspended into 500 ml of water. The slurry pH is adjusted to 8.5 using 1 Molar sodium hydroxide in water. (Using potassium hydroxide or lithium hydroxide instead of sodium hydroxide at this stage would result in the potassium or lithium form of the fibers.) Over one day, the pH is periodically checked and readjusted to 8.5 with sodium hydroxide. During this period, the fibers exchange to the sodium salt form, which is highly absorbent. Thus, the fibers swell. The fully swollen fibers are collected by suction filtration and are washed with distilled water.

### Example 11

This example shows the incorporation of a surface-hydrophilic anionic latex into a superabsorbent layered handsheet paper. Two separate slurries are prepared comprising 1.06 g (1.0 g dry wt.) 40% wt. unrefined NSK pulp in 250 ml distilled water, adjusted to pH 8.5 (0.1 N sodium hydroxide). Each pulp slurry is treated with 0.077 g of KYMENE^{TM} solution (13%). The latex prepared according to Example 1 (0.652 g) is added to each of the two KYMENE^{TM} treated NSK/water slurries and stirred for 30 minutes. The superabsorbent fiber of Example 9 (0.5 g dry wt.) is slurried in 150 ml distilled water at pH 8.5 (1.0 N sodium hydroxide). Each separate slurry is formed on a standard Deckle Box in distilled water at pH 8.5 and placed on a transfer fabric in the following order: top layer, 40%, sheet; middle layer, superabsorbent sheet; bottom layer, 40% sheet. Each layered sheet is transferred via a vacuum slit to a transfer sheet to form the finished paper handsheet. The finished handsheet is passed over a high vacuum twice and a second transfer sheet is placed on top of the finished sheet. The resulting sheets are passed over the drum dryer (155°C) 10-12 times, until dry.

### Example 12

This example shows the incorporation of a surface-hydrophilic anionic latex into a mixed furnish superabsorbent handsheet paper. 2.0 g dry wt. unrefined NSK pulp is dispersed in 35.0 ml distilled water at pH 8.5 (0.1N sodium hydroxide). Approximately 0.154 g of KYMENE^{TM} solution (13%) is added to the pulp dispersion. 3.0% (1.304 g) of the latex prepared according to Example 2 is added to the KYMENE^{TM} treated NSK pulp dispersion and stirred for 30 minutes. Separately, a dispersion is prepared comprising 20% of the absorbent fibers according to Example 10 and 150 ml distilled water at pH 8.5 (1.0N sodium hydroxide). The two slurries prepared in the foregoing manner are then combined and stirred for 15 minutes. The handsheet is formed on a standard Deckle Box with distilled water at pH 8.5 (1.0N sodium hydroxide). The handsheet is dried between two transfer fabrics on the drum dryer (115°C) using 10-12 passes to achieve dryness.

### Example 13

This example shows how to prepare a disposable baby diaper comprising a surface hydrophilic anionic latex. The dimensions listed are for a diaper intended for use with a child in the 6-10 kilogram size range. These dimensions can be modified proportionately for different size children, or for adult incontinence briefs, according to standard practice.
1. Backsheet: paper sheet prepared according to Example 8; width at top and bottom is 33 cm; notched inwardly on both sides to a width-at-center of 28.5 cm;.length is 50.2 cm.
2. Topsheet: nonwoven fabric scrim comprising lactate/glycolate copolyester fibers; width at top and bottom is 33 cm; notched inwardly on both sides to a width-at-center of 28.5 cm; length is 50.2 cm.
3. Absorbent core: oxidized cellulose (16-24% carboxyl); 8.4 mm thick, calendered; width at top and bottom 28.6 cm; notched inwardly at both sides to a width-at-center of 10.2 cm; length 44.5 cm; total 3.5 g polyacrylate absorbent gelling material particles dispensed throughout cellulose core material.
4. Elastic leg bands: four individual rubber strips (2 per side); width 4.77 mm; length 370 mm; thickness 0.178 mm (all the foregoing dimensions being in the relaxed state).
The diaper is prepared in standard fashion by positioning the core material covered with the topsheet on the backsheet and gluing. The elastic bands (designated "inner" and "outer", corresponding to the bands closest to, and farthest from, the core, respectively) are stretched to ca. 50.2 cm and positioned between the topsheet/backsheet along each longitudinal side (2 bands per side) of the core. The inner bands along each side are positioned ca. 55 mm from the narrowest width of the core (measured from the inner edge of the elastic band). This provides a spacing element along each side of the diaper comprising the flexible topsheet/backsheet material between the inner elastic and the curved edge of the core. The inner bands are glued down along their length in the stretched state. The outer bands are positioned ca. 13 mm from the inner bands, and are glued down along their length in the stretched state. The topsheet/backsheet assembly is flexible, and the glued-down bands contract to elasticize the sides of the diaper.

### Example 14

This example shows an ultra-thin disposable diaper comprising a surface hydrophilic anionic latex. The diaper comprises a paper backsheet which is substantially urine-impervious by virtue of having been treated on its inner surface with 15%-25% by weight of the sheet of the latex composition of Example 3.

### Example 15

This example shows a lightweight pantiliner, comprising a surface hydrophilic anionic latex, suitable for use between menstrual periods. The pantiliner comprises a pad (surface area 117 cm²; SSK air felt 3.0 g) containing 1.0 g of absorbent gelling material particles (commercial polyacrylate; nippon Shokubai); the pad being interposed between a porous formed-film topsheet according to U.S. Patent No. 4,463,045 and a backsheet which comprises a paper sheet prepared according to Example 8.

### Example 16

This example shows a pantiliner comprising a surface hydrophilic anionic latex. The pantiliner comprises a paper backsheet comprising 22% wt. of the surface hydrophilic anionic latex of example 4, an absorbent core comprising an absorbent sheet according to Example 12 and a fluid-permeable topsheet comprising a scrim of non-woven polypropylene fibers.

### Example 17

This example shows a catamenial product in the form of a sanitary napkin, comprising a surface hydrophilic anionic latex, having two flaps extending outward from its absorbent core. The sanitary napkin is prepared using an absorbent pad (surface 117 cm²; 8.5 g SSK air felt) per the design of U.S. Patent No. 4,687,478, Van Tillburg, issued Aug. 18, 1987. The backsheet comprises a paper sheet comprising ca. 20% by weight of the surface hydrophilic anionic latex of Example 6, and the topsheet comprises a nonwoven scrim of polylactate fibers.

### Example 18

This example shows a sanitary napkin comprising a surface hydrophilic anionic latex. The sanitary napkin of Example 17 is modified by replacing the topsheet with a porous nonglossy formed film, per U.S. Patent No. 4,687,478, and using a backsheet comprising a paper sheet comprising 25% by weight of the surface hydrophilic anionic latex of Example 1.

### Example 19

This example shows an ultra-thin sanitary napkin comprising a surface hydrophilic anionic latex. The ultra-thin sanitary napkin is prepared according to the article of Example 16, but using tripled sheets according to Example 11 to comprise the absorbent core and using a formed-film topsheet according to U.S. Patent No. 4,463,045 to replace the scrim topsheet.

## Claims

1. A latex composition useful formating paper sheets, said latex composition comprising :
(A) an aqueous phase selected from water, water-miscible solvents, or mixtures thereof; and
(B) from 5 to 50%, preferably from 10% to 25%, by weight of latex particles dispersed in the aqueous phase, the particles comprising an elastomeric hydrophobic core and an outer hydrophilic shell attached to the core,
(a) the core comprising a polymer comprising
(i) one or more elastomer forming monomeric units derived from ethyl acrylate, lauryl methacrylate, methyl acrylate, methyl methacrylate, *n*-butyl acrylate, *t*-butyl acrylate, 1,3-butadiene, ethylene, isoprene, propylene, styrene, *t*-butyl styrene, vinyl acetate, or mixtures thereof, and
(ii) one or more carboxylate containing monomeric units derived from acrylic acid, glycidyl methacrylate, itaconic acid, methacrylic acid, unsaturated fatty acids, vinyl benzoic acid, or mixtures thereof and
(b) the shell comprising moieties L-X, wherein L is a hydrophobic unsaturated hydrocarbyl group containing one or more double bonds preferably L comprises from 10 to 22 carbons, more preferably L is an olelyl group; and X is an alkoxy, amidate, amide, carboxylate, ethoxyiate, hydroxy, phosphate or sulfate, preferably X is a hydroxyl or polyoxyalkylene hydrophilic group, more preferably X is a polyoxyethylene hydrophilic group;
preferably the ratio of the elastomer forming monomeric units to the carboxylate containing monomeric units is from 100:1 to 100:30; more preferably from 100:2 to 100:10
wherein said latex composition is free of divinylbenzene.

2. The latex composition of Claim 1, wherein the elastomer forming monomeric units are derived from styrene and 1,3-butadiene, and the carboxylate containing monomeric units are derived from acrylic acid; preferably the ratio of styrene to 1,3-butadiene to acrylic acid is 40:60:2.

3. A process for preparing a latex composition useful for making paper sheets, said process, comprising the steps of:
(A) providing a mixture comprising
(a) water;
(b) a dispersion of from 5 to 50%, preferably 10% to 25%, of a polymerizable component which comprises
(i) one or more elastomer forming monomers selected from ethyl acrylate, lauryl methacrylate, methyl acrylate, methyl methacrylate, *n*-butyl acrylate, *t*-butyl acrylate, 1,3-butadiene, ethylene, isoprene, propylene, styrene, *t*-butyl styrene, vinyl acetate, or mixtures thereof, and
(ii) one or more carboxylate containing monomers selected from acrylic acid, glycidyl methacrylate, itaconic acid, methacrylic acid, unsaturated fatty acids, vinyl benzoic acid, or mixtures thereof;
(c) an effective amount of a water-soluble free-radical polymerization initiator,
(d) an effective amount of an amphiphilic diblock emulsifier L-X wherein L is a hydrophobic unsaturated hydrocarbyl group containing one or more double bonds, preferably L comprises from 10-22 carbons, more preferably L is an olelyl group; and X is an alkoxy, amidate, amide, carboxylate, ethoxylate, hydroxy, phosphate or sulfate, preferably X is a hydroxyl or polyoxyalkylene hydrophilic group, more preferably X is a polyoxyethylene hydrophilic group; and
(B) heating the mixture to a temperature sufficient to cause emulsion polymerization of the polymerizable component;
preferably the ratio of the elastomer forming monomer to the carboxylate containing monomer is from 100:1 to 100:30; preferably the ratio of the elastomer forming monomer to the free-radical polymerization initiator is from 100:0.5 to 100:10; preferably the ratio of the elastomer forming monomer to the nonionic diblock emulsifier is from 100:1 to 100:50; more preferably the ratio of the elastomer forming monomer to the nonionic diblock emulsifier is from 100:2 to 100:10
wherein said latex composition is free of divinylbenzene.

4. The process of Claim 3, wherein the polymerizable component comprises styrene, 1,3-butadiene, and acrylic acid; preferably the ratio of styrene to 1,3-butadiene to acrylic acid is 40:60:2.

5. The process of Claim 3, wherein the mixture further comprises an effective amount of a water-soluble chain transfer agent.

6. A paper sheet characterized in that it comprises multiple cellulosic fibers and the latex composition of any of Claims 1-2; preferably the paper sheet comprises from 1% to 30% of the latex composition.

7. The paper sheet of Claim 6, wherein the paper sheet additionally comprises absorbent gelling material.

8. An absorbent structure comprising a topsheet, a backsheet, and an absorbent core interposed between the topsheet and backsheet, wherein the backsheet is a paper sheet characterized in that it comprises multiple cellulosic fibers and the latex composition of any of Claims 1-2.

9. The absorbent structure of Claim 8, wherein the absorbent core comprises an absorbent gelling material.

10. The absorbent structure of any of Claims 8-9, wherein the absorbent structure is in the form of a disposable diaper, sanitary napkin, adult incontinence garment or pantiliner.

## Patentansprüche

1. Latexverbindung, die zur Herstellung von Papierblättern genutzt werden kann, wobei die Latexverbindung umfaßt:
(A) eine wäßrige Phase ausgewählt aus Wasser, wassermischfähigen Lösungsmitteln oder Mischungen daraus; und
(B) 5 bis 50 Gew.% vorzugsweise 10 bis 25 Gew.% in wäßriger Phase dispergierter Latexteilchen, wobei die Teilchen einen hydrophoben Elastomerkern und eine an den Kern angebrachte, äußere hydrophile Schale umfassen,
(a) wobei der Kern ein Polymer umfaßt, mit
(i) einer oder mehreren Elastomer bildenden Monomereinheiten, die aus Ethylacrylat, Laurylmethacrylat, Methylacrylat, Methylmethacrylat, n-Butylacrylat, t-Butylacrylat, 1,3-Butadien, Ehtylen, Isopren, Propylen, Styren, t-Butylstyren, Vinylacetat oder Mischungen daraus abgeleitet sind, und
(ii) einer oder mehreren Carboxylat enthaltender Monomereinheiten, die aus Acrylsäure, Glycidylmethacrylat, Itakonsäure, Methacrylsäure, ungesättigte Fettsäure, Venylbenzoesäure oder Mischungen daraus abgeleitet sind, und
(b) wobei die Schale Anteile L-X umfaßt, wobei L eine hydrophobe ungesättigte Hydrocarbylgruppe ist, die ein oder mehrere Doppelbindungen enthält, wobei L vorzugsweise 10 bis 22 Kohlenstoffe umfaßt, L ganz bevorzugt eine Oleylgruppe ist; und wobei X ein Alkoxy, Amidad, Amid, Carboxylat, Ethoxylat, Hydroxy, Phosphat oder Sulfat ist, X vorzugsweise eine Hydroxyl- oder hydrophile Polyoxyalkylengruppe ist, ganz bevorzugt X eine hydrophile Polyoxyethylengruppe ist;
wobei das Verhältnis der Elastomer bildenden Monomereinheiten zu den Carboxylat enthaltenden Monomereinheiten 100:1 bis 100:30, ganz bevorzugt von 100:2 bis 100:10 beträgt,
wobei die Latexverbindung frei von Divinylbenzen ist.

2. Latexverbindung nach Anspruch 1, in welcher die Elastomer bildenden Monomereinheiten abgeleitet sind von Styren und 1,3-Butadien und die Carboxylat enthaltenden Monomereinheiten abgeleitet sind von Acrylsäure, wobei das Verhältnis von Styren zu 1,3-Butadien zu Acrylsäure vorzugsweise 40:60:2 beträgt.

3. Verfahren zum Herstellen einer Latexverbindung, die zum Herstellen von Papierblättem genutzt werden kann, wobei das Verfahren die Schritte umfaßt:
(A) Bereitstellen eines Gemisches umfassend
(a) Wasser;
(b) eine Dispersion von 5 bis 50% vorzugsweise 10 % bis 25%, einer polymerisierbaren Komponente, welche umfaßt
(i) ein oder mehrere Elastomer bildende Monomere, ausgewählt aus Ethylacrylat, Laurylmethacrylat, Methylacrylat, Methylmethacrylat, n-Butylacrylat, t-Butylacrylat, 1,3-Butadien, Ehtylen, Isopren, Propylen, Styren, t-Butylstyren, Venylacetat oder Mischungen daraus, und
(ii) ein oder mehrere Carboxylat enthaltende Monomere, ausgewählt aus Acrylsäure, Glycidylmethacrylat, Itakonsäure, Methacrylsäure, ungesättigte Fettsäure, Venylbenzoesäure oder Mischungen daraus;
(c) einer effektiven Menge eines wasserlöslichen Polymerisationsinitiators mit freiem Radikal;
(d) einer effektiven Menge eines amphiphilischen Diblock-Emulgators L-X, wobei L eine hydrophobe ungesättigte Hydorcarbylgruppe ist, die ein oder mehrere Doppelbindungen enthält, L vorzugsweise 10-22 Kohlenstoffe umfaßt, L ganz bevorzugt eine Oleylgruppe ist; und wobei X ein Alkoxy, Amidat, Amid, Carboxylat, Ethoxylat, Hydroxy, Phosphat oder Sulfat ist, X vorzugsweise eine Hydroxyl- oder hydrophile Polyoxyalkylengruppe ist, ganz bevorzugt X eine hydrophile Polyoxyethylengruppe ist; und
(B) Erwärmen des Gemisches auf eine Temperatur, die ausreicht, um eine Emulsionpolymerisation der polymerisierfähigen Komponente zu veranlassen;
wobei das Verhältnis des Elastomer bildenden Monomers zu dem Carboxylat enthaltenden Monomer von 100:1 zu 100:30 beträgt, das Verhältnis des Elastomer bildenden Monomers zu dem Polymerisationsinitiator mit freiem Radikal von 100:0,5 zu 100:10 beträgt; das Verhältnis des Elastomer bildenden Monomers zu dem nicht ionischen Diblock-Emulgator von 100:1 zu 100:50 beträgt, ganz bevorzugt das Verhältnis des Elastomer bildenden Monomers zu dem nicht ionischen Diblock-Emulgator von 100:2 bis 100:10 beträgt,
wobei die Latexverbindung frei von Divenylbenzen ist.

4. Verfahren nach Anspruch 3, in welchem die polymerisierfähige Komponente Styren 1,3-Butadien und Acrylsäure umfaßt, wobei das Verhältnis von Styren zu 1,3-Butadien zu Acrylsäure vorzugsweise 40:60:2 beträgt.

5. Verfahren nach Anspruch 3, in welchem das Gemisch ferner eine effektive Menge eines wasserlöslichen Kettentransfermittels umfaßt.

6. Papierblatt, dadurch gekennzeichnet, daß es zahlreiche Zellulosefasern und die Latexverbindung nach einem der Ansprüche 1-2 umfaßt, wobei das Papierblatt vorzugsweise 1% bis 30% der Latexverbindung umfaßt.

7. Papierblatt nach Anspruch 6, in welchem das Papierblatt zusätzlich ein absorbierendes Geliermaterial umfaßt.

8. Absorbierende Struktur mit einer Oberschicht, einer Unterschicht und einem zwischen der Oberschicht und der Unterschicht angeordneten absorbierenden Kern, in welcher die Unterschicht ein Papierblatt ist, dadurch gekennzeichnet, daß dieses zahlreiche Zellulosefasern und die Latexverbindung aus einem der Ansprüche 1-2 umfaßt.

9. Absorbierende Struktur nach Anspruch 8, in welcher der absorbierende Kern ein absorbierendes Geliermaterial umfaßt.

10. Absorbierende Struktur nach einem der Ansprüche 8-9, in welchem die absorbierende Struktur in Form einer Einwegwindel, einer Damenbinde, einer Inkontinenzwäsche für Erwachsene oder einer Höscheneinlage vorliegt.

## Revendications

1. Composition de latex utile pour fabriquer des feuilles de papier, ladite composition de latex comprenant :
(A) une phase aqueuse choisie parmi l'eau, les solvants miscibles à l'eau ou des mélanges de ceux-ci ; et
(B) de 5 à 50%, de préférence de 10% à 25%, en poids de particules de latex dispersées dans la phase aqueuse, les particules comprenant un coeur hydrophobe élastomère et une enveloppe externe hydrophile attachée au coeur,
(a) le coeur comprenant un polymère comprenant
(i) un ou plusieurs motifs monomères formant un élastomère provenant d'acrylate d'éthyle, de méthacrylate de lauryle, d'acrylate de méthyle, de méthacrylate de méthyle, d'acrylate de *n*-butyle, d'acrylate de *t*-butyle, de 1,3-butadiène, d'éthylène, d'isoprène, de propylène, de styrène, de *t*-butylstyrène, d'acétate de vinyle, ou de mélanges de ceux-ci, et
(ii) un ou plusieurs motifs monomères contenant un groupe carboxylate provenant d'acide acrylique, de méthacrylate de glycidyle, d'acide itaconiquc, d'acide méthacrylique, d'acides gras insaturés, d'acide vinylbenzoïque ou de mélanges de ceux-ci, et
(b) l'enveloppe comprenant des fractions L-X, où L est un groupe hydrophobe hydrocarbyle insaturé contenant une ou plusieurs liaisons doubles, de préférence L comprend de 10 à 22 atomes de carbones mieux encore I, est un groupe oléyle ; et X est un groupe alcoxy, amidate, amide, carboxylate, éthoxylate, hydroxy, phosphate ou sulfate, de préférence X est un groupe hydrophile hydroxyle ou polyoxyalkylène, mieux encore X est un groupe hydrophile polyoxyéthylène ;
de préférence, le rapport des motifs monomères formant un élastomère aux motifs monomères contenant un groupe carboxylate est de 100:1 à 100:30 ; de préférence encore de 100:2 à 100:10,
ladite composition de latex étant exempte de divinylbenzène.

2. Composition de latex selon la revendication 1, dans laquelle les motifs monomères formant un élastomère proviennent de styrène et de 1,3-butadiène, et les motifs monomères contenant un groupe carboxylate proviennent d'acide acrylique ; de préférence le rapport du styrène au 1,3-butadiène à l'acide acrylique est de 40:60:2.

3. Procédé pour préparer une composition de latex utile pour fabriquer des feuilles de papier, ledit procédé comprenant les étapes consistant
(A) à fournir un mélange comprenant
(a) de l'eau ;
(b) une dispersion de 5 à 50 %, de préférence 10 % à 25 %, d'un constituant polymérisable qui comprend
(i) un ou plusieurs monomères formant un élastomère choisis parmi l'acrylate d'éthyle, le méthacrylate de lauryle, l'acrylate de méthyle, le méthacrylate de méthyle, l'acrylate de *n*-butyle, l'acrylate de *t*-butyle, le 1,3-butadiène, l'éthylène, l'isoprène, le propylène, le styrène, le *t*-butylstyrène, l'acétate de vinyle, ou les mélanges de ceux-ci, et
(ii) un ou plusieurs monomères contenant un groupe carboxylate choisis parmi l'acide acrylique, le méthacrylate de glycidyle, l'acide itaconique, l'acide méthacrylique, les acides gras insaturés, l'acide vinylbenzoïque ou les mélanges de ceux-ci ;
(c) une quantité efficace d'un initiateur de polymérisation radicalaire hydrosoluble ;
(d) une quantité efficace d'un émulsifiant amphiphile à bibloc L-X où L est un groupe hydrophobe hydrocarbyle insaturé contenant une ou plusieurs liaisons doubles, de préférence L comprend de 10 à 22 atomes de carbone mieux encore L est un groupe oléyle ; et X est un groupe alcoxy, amidate, amide, carboxylate, éthoxylate, hydroxy, phosphate ou sulfate, de préférence X est un groupe hydrophile hydroxyle ou polyoxyalkylène, mieux encore X est un groupe hydrophile polyoxyéthylène ; et
(B) à chauffer le mélange à une température suffisante pour provoquer la polymérisation en émulsion du constituant polymérisable ;
de préférence, le rapport du monomère formant un élastomère au monomère contenant un groupe carboxylate est de 100:1 à 100:30 ; de préférence, le rapport du monomère formant un élastomère à l'initiateur de polymérisation radicalaire est de 100:0,5 à 100:10 ; de préférence le rapport du monomère formant un élastomère à l'émulsifiant non ionique à bibloc est de 100:1 à 100:50, mieux encore le rapport du monomère formant un élastomère à l'émulsifiant non ionique à bibloc est de 100:2 à 100:10,
dans lequel ladite composition de latex est exempte de divinylbenzène.

4. Procédé selon la revendication 3, dans lequel le constituant polymérisable comprend du styrène, du 1,3-butadiène et de l'acide acrylique ; de préférence le rapport du styrène au 1,3-butadiène à l'acide acrylique est de 40:60:2.

5. Procédé selon la revendication 3, dans lequel le mélange comprend en outre une quantité efficace d'un agent de transfert de chaîne hydrosoluble.

6. Feuille de papier caractérisée en ce qu'elle comprend de multiples fibres cellulosiques et la composition de latex selon l'une quelconque des revendications 1-2 ; de préférence, la feuille de papier comprend de 1 % à 30 % de la composition de latex.

7. Feuille de papier selon la revendication 6, la feuille de papier comprenant en plus une matière gélifiante absorbante.

8. Structure absorbante comprenant une feuille de dessus, une feuille de fond et une âme absorbante intercalée entre la feuille de dessus et la feuille de fond, dans laquelle la feuille de fond est une feuille de papier caractérisée en ce qu'elle comprend de multiples fibres cellulosiques et la composition de latex selon l'une quelconque des revendications 1-2.

9. Structure absorbante selon la revendication 8, dans laquelle l'âme absorbante comprend une matière gélifiante absorbante.

10. Structure absorbante selon l'une quelconque des revendications 8-9, la structure absorbante étant sous la forme d'une couche jetable, d'une serviette hygiénique, d'un vêtement d'incontinence pour adultes ou d'un protège-slip.
